# EUROPEAN PATENT APPLICATION

(11) **EP 2 442 519 A1**
(43) Date of publication of application: **18.04.2012**
(21) Application number: 10785662.7
(22) Date of filing: 20.01.2010
(51) Int. Cl.: H04L 29/06

(54) **METHOD AND SYSTEM FOR AUTHENTICATING NETWORK DEVICE**

(30) Priority: 12.06.2009 CN 200910147578
(71) Applicant: ZTE Corporation, Shenzhen, Guangdong 518057 (CN)
(72) Inventor: JIANG, Liang, Shenzhen Guangdong 518057 (CN); TENG, Zhimeng, Shenzhen Guangdong 518057 (CN)
(74) Representative: Schröer, Gernot H.
(86) International application number: PCT/CN2010/070284
(87) International publication number: WO 2010/142149

(57) **Abstract**

A method and system for authenticating a network device are provided. When the network device is authenticated, the integrity check result recorded in the trusted environment of the network device is added to perform a joint determination so as to finally determine whether to initiate an authentication request or whether to respond with authentication success. Only when the received access authentication request message and the integrity check result recorded in the trusted environment of the network device are both right, does the network device respond with the authentication success. Only when the integrity check result recorded in the trusted environment of the network device is right, can the network device initiatively initiate an effective access authentication request. Thus, only in the case of right integrity of the network device can the authentication for the network device be passed, so that the safety authentication for the network device is ensured and the possibility of passing the authentication for unlawful devices or juggled devices is eliminated.

## Description

### Technical Field

The present invention relates to the network security technique in the telecommunication system, and particularly, to a method and system for authenticating a network equipment.

### Background of the Related Art

In the telecommunication industry, the software and hardware information of the network equipment which is able to access users' security context should be secure to provide a secure and reliable communication environment for users. Generally, the security of the software and hardware of the network equipment is ensured by the physical security, for example, in the Universal Mobile Telecommunications System (UMTS), the Home Location Register (HLR), Visiting Location Register (VLR), and Radio Network Controller (RNC) are the network equipments related to the security, they are set in the operator's machinery room, which ensures the equipments' physical security, and thereby ensures the security of their software and hardware equipments.

However, in a certain communication environment, it exists that situation of the network equipment which is able to access users' security context not having a physical security environment. For example: for the evolved NodeB (eNB), Home NodeB (HNB) and so on in the Long Term Evolution/System Architecture Evolution (LTE/SAE), since they are suitable for flexible deployment scenarios, they are not set in the internal of the operators' machinery rooms, and therefore, they are difficult to have a physical security environment. In this situation, how to ensure the integrality of the software and hardware of these network equipments is quite important. Because in the environment which is non physical security, the software and hardware equipment of the network equipment is likely to be replaced at any moment, thus the security of this link in the system will be destroyed, and in the severe case, the security of the whole system will be endangered.

In order to ensure the security of the network equipments which are difficult to have the physical security environment, a common practice is to carry out access authentication management for the network equipments, such as the Extensible Authentication Protocol- Authentication and Key Agreement (EAP-AKA), the authentication based on the public key, the AKA authentication and so on. Generally, the authentication management comprises:
Firstly, setting a security certificate or security card in the network equipment as a security root of the network equipment;
And then, when the network equipment accesses the core network initially, validating the security information in the security certificate or security card by the corresponding authentication protocol;
Finally, the core network deciding whether the network equipment is allowed to access the core network according to the validation result.

The present authentication method can ensure the security of the network equipment in a certain extent. However, this method has a certain limitation, which is only the security information in the security certificate or security card is authenticated. As long as the security information in the security certificate or the security information in the security card is correct, the network considers that the network equipment is secure.

However, this is not the case. If the tampered network equipment obtains a legal security card or security certificate, then the core network will consider that this network equipment is secure as well. Obviously, this network equipment at this time is not necessarily secure. That means the application of the present method for authenticating the network equipment cannot ensure the secure authentication for the network equipments, and there exists possibility of the security of the whole system being endangered.

### Summary of the Invention

In a view of this, the main object of the present invention is to provide a method for authenticating a network equipment, which can ensure the secure authentication for the network equipment, and eliminate the possibility of the security of the whole system being endangered.

Another object of the present invention is to provide a system for authenticating a network equipment, which can ensure the secure authentication of a network equipment, and eliminate the possibility of the security of the whole system being endangered.

In order to achieve above objects, the technical scheme of the present invention is implemented as follows:

The present invention provides a method for authenticating a network equipment, and the method comprises: carrying out the integrity checking on the network equipment; and when the network equipment receives an access authentication request, judging whether both of the access authentication request and the integrity checking result are correct, and if both are correct, sending an authentication success response, or sending an authentication failure response.

After the step of checking the integrity of the network equipment, the method further comprises: the network equipment or a trust environment of the network equipment recording the integrity checking result. In the method of the present invention, the step of judging whether both of said access authentication request and integrity checking result are correct comprises: if said network equipment or a trust environment of the network equipment checks that said access authentication request is correct and judges that the integrity checking result is correct, said network equipment or the trust environment of the network equipment sending an authentication success response; if said network equipment or the trust environment of the network equipment checks that said access authentication request is correct but judges that the integrity checking result is wrong, or checks that said access authentication request is wrong, or the access authentication request is not necessary to check, said network equipment or the trust environment of the network equipment sending an authentication failure response.

In the method of the present invention, said integrity checking includes integrity checking on the software of the network equipment and/or integrity checking on the hardware of the network equipment.

The present invention also provides a method for authenticating a network equipment, and the method comprises: carrying out the integrity checking on the network equipment; and in a case that an access authentication request is initiated by the network equipment, said network equipment or a trust environment of the network equipment judging whether the integrity checking result is wrong, and if it is wrong, not sending the access authentication request.

After the step of carrying out the integrity checking on the network equipment, the method further comprises: the network equipment or the trust environment of the network equipment recording the integrity checking result.

In the method of the present invention, the integrity checking includes integrity checking on the software of the network equipment and/or integrity checking on the hardware of the network equipment.

The present invention also provides a home authentication server of a network equipment supporting authentication for the network equipment, said home authentication server of the network equipment being configured to initiate an access authentication request to the network equipment, receive an authentication success/failure response returned from the network equipment, analyze the received authentication success/failure response, and determine whether the authentication for the network equipment is passed.

The present invention also provides a home authentication server of a network equipment supporting authentication for the network equipment, said home authentication server of the network equipment being configured to receive an access authentication request of the network equipment, analyze the access authentication request of the network equipment, and determine whether the access authentication request is valid, and determine whether the authentication for the network equipment is passed.

The present invention also provides a network equipment supporting authentication, said network equipment being configured with a trust environment, said network equipment being configured to record integrity checking result by said trust environment, receive an access authentication request from a home authentication server of the network equipment, judge whether both of the received access authentication request and recorded integrity checking result are correct, and when both are correct, return an authentication success response to the home authentication server of the network equipment, or else return an authentication failure response to the home authentication server of the network equipment.

In the network equipment of the present invention, said trust environment of the network equipment may comprise a recording unit and a judging unit, said recording unit is configured to carry out the integrity checking cooperating with a integrity checking means, and record the integrity checking result; said judging unit is configured to receive the access authentication request from the home authentication server of the network equipment, and when both of the received access authentication request and the integrity checking result recorded by said recording unit are correct, return the authentication success response to the home authentication server of the network equipment, and when the received access authentication request is judged to be correct but the integrity checking result is judged to be wrong, or the received access authentication request is judged to be wrong, or the received access authentication request is not necessary to check, return the authentication failure response to the home authentication server of the network equipment.

The present invention also provides a network equipment supporting authentication, said network equipment being configured with a trust environment, said network equipment being configured to in a case that an access authentication request is initiated by the network equipment, record integrity checking result by said trust environment, and judge whether the recorded integrity checking result is wrong, and if it is wrong, not send the access authentication request.

The present invention also provides a system for authenticating a network equipment, the system comprising an integrity checking means, a network equipment configured with a trust environment and a home authentication server of the network equipment, wherein the integrity checking means is configured to carry out integrity checking on the network equipment; the network equipment is configured to record integrity checking result by said trust environment, receive an access authentication request from a home authentication server of the network equipment, judge whether both of the received access authentication request and recorded integrity checking result are correct, and when both are correct, return an authentication success response to the home authentication server of the network equipment, or return an authentication failure response to the home authentication server of the network equipment; the home authentication server of a network equipment is configured to initiate an access authentication request to the network equipment, receive an authentication success/failure response returned from the network equipment, analyze the authentication response messages returned by the network equipment, and determine whether the authentication for the network equipment is passed.

The network equipment comprises a recording unit and a judging unit configured in the trust environment, wherein said recording unit is configured to carry out the integrity checking cooperating with a integrity checking means, and record the integrity checking result; said judging unit is configured to receive the access authentication request from the home authentication server of the network equipment, and when both of the received access authentication request and the recorded integrity checking result are judged to be correct, return the authentication success response to the home authentication server of the network equipment, and when the received access authentication request is judged to be correct but the integrity checking result is judged to be wrong, or the received access authentication request is judged to be wrong, or the received access authentication request is not necessary to check, return the authentication failure response to the home authentication server of the network equipment.

The present invention also provides a system for authenticating a network equipment, the system comprising an integrity checking means, a network equipment configured with a trust environment and a home authentication server of the network equipment, wherein the integrity checking means is configured to carry out integrity checking on the network equipment; said network equipment is configured to in a case that an access authentication request is initiated by the network equipment, record integrity checking result by said trust environment, and judge whether the recorded integrity checking result is wrong, and if it is wrong, not send the access authentication request; Said home authentication server of the network equipment is configured to receive an access authentication request of the network equipment, analyze the access authentication request of the network equipment, determine whether the access authentication request is valid, and determine whether the authentication for the network equipment is passed.

In the system for authenticating the network equipment according to the present invention, said integrity checking means can locate in the trust environment of the network equipment.

It can be seen from the above technical schemes provided by the present invention that when the network equipment is authenticated, the integrity checking result recorded in the trust environment of the network equipment is added for joint judgment to determine whether to respond with the authentication success or whether to send a valid access authentication request. Only when both of the access authentication request information and the integrity checking result recorded in the trust environment of the network equipment are correct, the authentication server is responded with the authentication success, and the authentication server judges whether the authentication for the network equipment is passed according to the received authentication success response. Only when the integrity checking result recorded in the trust environment of the network equipment is correct, the access authentication request is sent to the authentication server, and the authentication server judges whether the authentication for the network equipment is passed according to the received access authentication request. And thus only in the situation of the integrity of the network equipment being correct, the authentication for the network equipment is passed. And thus the secure authentication for the network equipment is ensured, and the possibility that the illegal device or tampered device passes the authentication is eliminated.

### Brief Description of Drawings

FIG. 1 is a flow chart of the method for authenticating a network equipment according to the present invention;
FIG. 2 is a schematic diagram of the flow for the integrity checking on the software of the network equipment according to an example of the present invention;
FIG. 3 is a schematic diagram of the flow for the integrity checking on the hardware of the network equipment according to an example of the present invention;
FIG. 4 is a schematic diagram of the normal flow for the EAP-AKA according to an example of the present invention;
FIG. 5 is a schematic diagram of the abnormal flow for the EAP-AKA according to an example of the present invention;
FIG. 6 is a schematic diagram of the composition structure of the system for authenticating a network equipment according to the present invention.

### Preferred Embodiments of the Present Invention

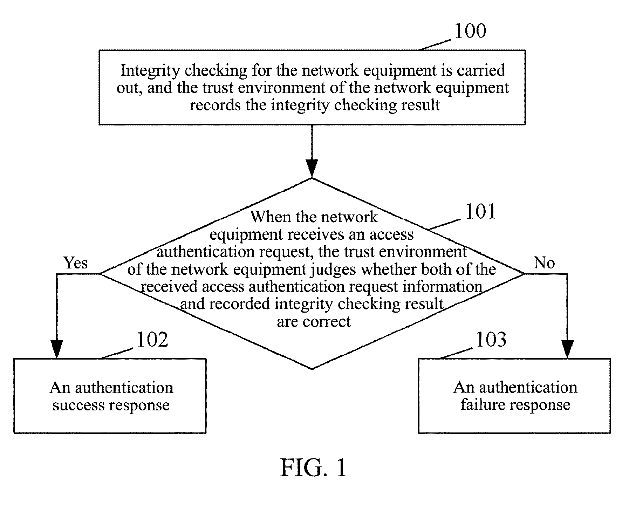

FIG. 1 is a flow chart of the method for authenticating a network equipment according to the present invention. As shown in FIG. 1, the method of the present invention comprises: Step 100: integrity checking for the network equipment is carried out, and the trust environment of the network equipment records the integrity checking result.

The Trust Environment (TRE) is a module in the network equipment able to perform secure storage and secure calculation. The TRE can be a circuit which is fixed in the network equipment, and it also can be a swap-pable card. For instance, the TRE can be a chip which is specially used to the secure storage and secure calculation and so on. The trust environment can provide different functions according to different requirements, for example the trust environment can store authentication parameters, can calculate the received authentication parameters, can judge whether the received authentication information is correct according to the calculation result, and can effectively protect the access authentication request or access authentication response and so on.

The integrity checking in this step comprises the integrity checking of the software of the network equipment and/or the integrity checking of the hardware of the network equipment. When both results of the integrity checking of the software of the network equipment and the integrity checking of the network equipment are correct, the recorded integrity checking result is correct; and when the results of the integrity checking of the software of the network equipment and/or the integrity checking of the hardware of the network equipment are wrong, the recorded integrity checking result is wrong.

Step 101: after the network equipment receives an access authentication request, the trust environment of the network equipment judges whether both of the received access authentication request information and recorded integrity checking result are correct, and if both are correct, the step 102 is carried out, or else the step 103 is carried out.

When the trust environment of the network equipment receives the access authentication request, the judgment of the correctness of the access authentication request information belongs to the prior art, and the RFC correlative protocols can be referred to. The point emphasized in this step is the integrity checking result recorded in the trust environment of the network equipment is also taken as one of bases for judging whether the authentication is successful, which ensures the security authentication for the network equipment.

Step 102: the network equipment sends an authentication success response. At this time, the network equipment is secure. This flow is ended.

Step 103: the network equipment sends an authentication failure response. At this time, the network equipment may be insecure.

The home authentication server of the network equipment will analyze the authentication response message returned by the network equipment to determine whether the authentication for the network equipment is passed.

In another example of the present invention, the above step 100 can comprise: carrying out integrity checking on the network equipment.

The point emphasized in this step of the method according to the present invention is only when both of the access authentication request information and the integrity checking result recorded in the trust environment of the network equipment are correct, the authentication for the network equipment is considered successful, and the network equipment is secure. And thus the secure authentication for the network equipment is ensured, and the possibility that the illegal device or tampered device passes the authentication is eliminated.

It should be noted that in the situation of the network equipment initiating an access authentication request, and when the network equipment requests the trust environment of the network equipment for carrying out the security protection for the access authentication request, and when the trust environment of the network equipment judges the recorded integrity checking result is wrong, the trust environment of the network equipment does not return a security protection result of the access authentication to the network equipment, but notifies the network equipment not to initiate the access authentication request. Wherein the security protection for the access authentication request includes but is not limited to the integrity protection for the message, or the digital signature of the message and so on. In this situation, if the network equipment is tampered or illegal, even though the network equipment receives the notification of not initiating an access authentication request from its trust environment, the network equipment will also initiate an access authentication request to its home authentication server. At this time, the home authentication server of the network equipment analyses the access authentication request of the network equipment, confirms the validity of the access authentication request, and determines whether the authentication for the network equipment is passed.

Below it will describe the implementation of steps 101 and 102 respectively in detail with reference to examples.

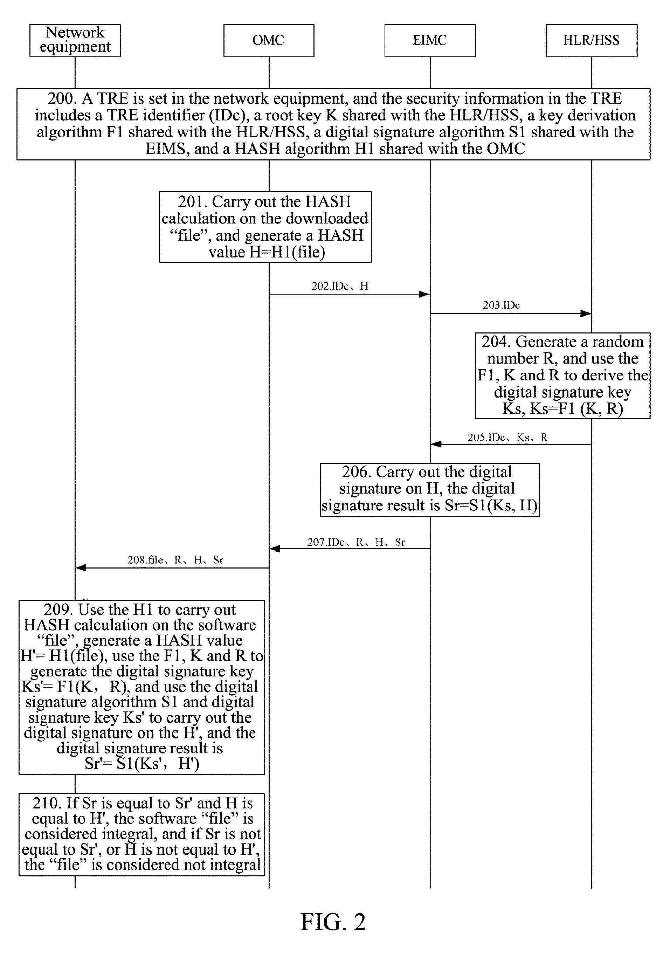

FIG. 2 is a schematic diagram of the flow for the integrity checking of the software of the network equipment according to the present invention. In the example shown in FIG. 2, it is assumed that the network equipment downloads software from an operation and maintenance center (namely this software is regarded as the software and hardware information to be checked). As shown in FIG. 2, after the software is downloaded, the integrity checking for this software comprises the following steps:
Step 200: a TRE is set in the network equipment (NE) which requires managing, and the security information in the TRE includes a TRE identifier (IDc), a root key K shared with home server (HLR/HSS) of the network equipment, a key derivation algorithm F1 shared with the HLR/HSS, a digital signature algorithm S1 shared with the equipment integrity management center (EIMS), and a HASH algorithm H1 shared with the operation and maintenance center (OMC). Wherein, the digital signature algorithm S1 could be a Hashed Message Authentication Code (HMAC) algorithm, such as the HMAC-SHA1, HMAC-SHA256 and so on. Besides, the identifier IDi of this NE and the corresponding relationship between the IDi and IDc are set in the OMC.
Step 201: when the network equipment requests downloading of software (denoted as "file") from the OMC, the OMC uses the HASH algorithm H1 to carry out the HASH calculation on this software "file", and generates security characteristic information H=H1(file); It should be noted that if the OMC has already had the security characteristic information H of this software, the OMC can use this value directly without carrying out the HASH calculation.
Steps 202∼203: the OMC sends the hashed value H and the IDc corresponding to the IDi of this network equipment to the EIMC, and the EIMC sends the received IDc to the HLR/HSS.
Step 204, the HLR/HSS generates a random number R, obtains the root key K of the corresponding TRE according to the IDc, and uses F1, K and R to derive the digital signature key Ks=F1 (K, R). Herein the digital signature key Ks can also be called a sub key of the root key K.
Step 205: the HLR/HSS sends the IDc, digital signature key Ks and random number R to the EIMC.
Step 206: the EIMC uses the digital signature algorithm S1 and digital signature key Ks to carry out the digital signature on the hashed value H to obtain the digital signature result Sr=S1(Ks, H).
Step 207: the EIMC sends the IDc, random number R, hashed value H and the digital signature result Sr to the OMC.
Step 208: the OMC sends the software "fire" to be downloaded by the request of the network equipment, received random number R, hashed value H and digital signature result Sr to the network equipment, and then the network equipment sends above information to the TRE.
Step 209: the TRE of the network equipment uses H1 to carry out HASH calculation on the software "fire" to generate security characteristic information H'= H1(file), uses the key derivation algorithm F1, root key K and random number R to generate the digital signature key Ks'= F1(K , R), and uses the digital signature algorithm S1 and digital signature key Ks' to make the digital signature on the security characteristic information H' to obtain the digital signature result Sr'= S1(Ks' , H').
Step 210: the TRE of the network equipment judges whether the received software "fire" is integrity according to the values of the two digital signature keys Sr and Sr': if the values of the Sr and Sr' are equal, the "fire" is considered integral, or the "fire" is considered not integral. Furthermore, the TRE of the network equipment can also judge whether the received software "fire" is integral according to the values of H and H': if the values of the Sr and Sr' are equal and the values of the H and H' are equal, the software "fire" is considered integral, or else the software "fire" is considered not integral.

So far, the network equipment has downloaded the software "fire" from the OMC, checked the integrity of this software "fire", and confirmed that this software is not tampered or replaced in the transmission process.

Afterwards, the network equipment can store the received software "fire", and the values of the R, Sr and H in order to use the value of the R to generate the Ks' and generate the H' and Sr' of this software "fire" according to the method in the step 209 again and then check the integrity of this software "fire" according to the method in the step 210 when it is required (e.g. after restart, or before using this software "fire").

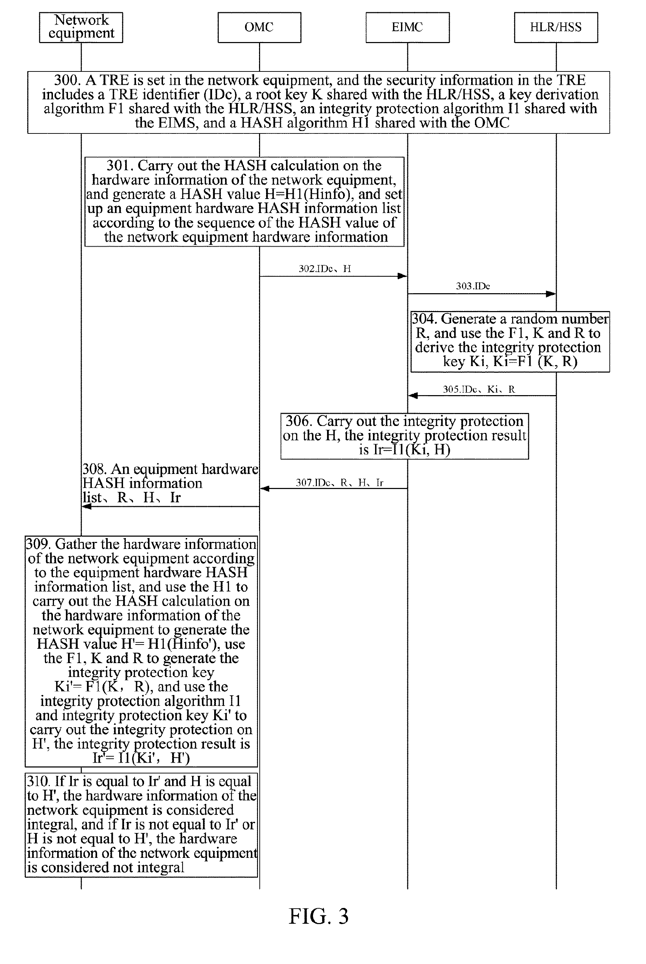

FIG. 3 is a schematic diagram of the flow for the integrity checking of the hardware of the network equipment according to an example of the present invention. In the example shown in FIG. 3, it is assumed that the network equipment needs to check the integrity of the hardware, and to judge whether the hardware of the network equipment is replaced, namely, the hardware configuration information is taken as the software and hardware information to be checked. As shown in FIG. 3, the method comprises the following steps: Step 300: a TRE is set in the network equipment which requires managing, and the security information in the TRE includes an IDc, root key K shared with the HLR/HSS, key derivation algorithm F1 shared with the HLR/HSS, the integrity protection algorithm 11 shared with the EIMC, and the HASH algorithm H1 (a HASH algorithm without a key) shared with the OMC.

Wherein, the integrity protection algorithm 11 could be the HMAC algorithm, such as the HMAC-SHA1, HMAC-SHA256 and so on. Besides, the identifier IDi of this NE and the corresponding relationship between the IDi and IDc are set in the OMC.

Step 301: when the network equipment requests the hardware integrity protection information from the OMC, the OMC uses the HASH algorithm H1 to carry out the HASH calculation on the hardware configuration information Hinfo in the network equipment which requires the integrity protection, and generates the security characteristic information H=H1(Hinfo); The OMC is also required to generate the hardware information sequence list (or called equipment hardware HASH information list) of the hardware configuration information Hinfo, and the hardware information sequence list includes the name of the hardware and the sequence information of each hardware when generating the security characteristic information. For instance, the hardware information sequence list includes the following character string "professor identifier, memory capability"; this character string indicates the hardware configuration information Hinfo includes the processor identifier and the memory capability, and the HASH calculation is carried out according to the sequence of the processor identifier being prior to the memory capability to generate the security characteristic information H. The hardware information sequence list will be sent to the network equipment in the subsequent steps in order that the network equipment extracts the same type of hardware information and carries out the HASH calculation in the same sequence. It should be noted that if the network equipment and the OMC pre-set the hardware type and the sequence included in the hardware configuration information Hinfo, the OMC does not need to generate the above hardware information sequence list and send it to the network equipment.

Steps 302∼303: the OMC sends the security characteristic information H and the IDc corresponding to the IDi of this network equipment to the EIMC, and the EIMC sends the received IDc to the HLR/HSS.

Step 304, the HLR/HSS generates a random number R, obtains the root key K of the corresponding TRE according to the IDc, and uses the F1, K and R to derive the integrity protection key Ki=F1 (K, R). Herein the integrity protection key Ki can also be called a sub key of the root key K.

Step 305: the HLR/HSS sends the IDc, integrity protection key Ki and random number R to the EIMC.

Step 306: the EIMC uses the integrity protection algorithm 11 and integrity protection key Ki to carry out the integrity protection on the security characteristic information H to obtain the integrity protection result Ir=I1(Ki, H).

Step 307: the EIMC sends the IDc, random number R, security characteristic information H and the integrity protection result Ir to the OMC. Step 308: the OMC sends the hardware information sequence list corresponding to the hardware configuration information Hinfo, random number R, security characteristic information H and the integrity protection result Ir to the network equipment, and the network equipment then sends the above information to the TRE.

Step 309: the network equipment locally gathers and generates in sequence the hardware configuration information Hinfo' according to the hardware information sequence list, and indicates the TRE to use the HASH algorithm H1 to carry out the HASH calculation on the Hinfo' to generate the security characteristic information H'= H1(Hinfo'), use the key derivation algorithm F1, root key K and random number R to generate the integrity protection key Ki'= F1(K , R), and use the integrity protection algorithm 11 and integrity protection key Ki' to encrypt the H' to obtain the integrity protection result Ir'= S1(Ki' , H').

Step 310: the TRE of the network equipment judges whether the hardware of the network equipment is integral according to the values of the Ir and Ir': if the values of the Ir and Ir' are equal, the hardware is considered integral, or else the hardware is considered not integral.

Furthermore, the TRE of the network equipment can also judge whether the hardware is integral according to the values of H and H': if the values of the Ir and Ir' are equal and the values of the H and H' are equal, the hardware is considered integral, or else the hardware is considered not integral. It should be noted that non-integrity of the hardware may be resulted by that the hardware of the network equipment is replaced, or that the hardware information sequence list, R, H or Sr is tampered in the transmission process.

Afterwards, the network equipment can store the received hardware information sequence list, R, H and Ir in order to generate the hardware configuration information Hinfo' according to the hardware information sequence list, use the value of R to generate Ki', and generate the H' and Ir' according to the method in the step 309 again when it is required (such as after restart, or before a certain hardware is used), and then check the integrity of the hardware according to the method in the step 310.

According to the principles in FIG. 2 and FIG. 3 of the present invention, the above examples can also have various transformations.
(1) the OMC can only store the equipment identifier IDi, and the corresponding relationship between the IDi and IDc is set in the EIMC; In this situation, in the steps 202/302, the OMC sends H and the identifier IDi of the network equipment to the equipment integrity management center (EIMC); and in steps 203/303, the EIMC obtains corresponding IDc according to the corresponding relationship between the IDi and IDc, and sends the corresponding IDc to the HLR/HSS; and in steps 207/307, the EIMC obtains the corresponding IDi again according to the corresponding relationship between the IDi and IDc, and sends IDi, R, H, and Sr/Ir to the operation and maintenance center OMC.
(2) if the EIMC stores the digital signature key corresponding to the IDc and key derivation parameter (namely random number R), then the digital signature key corresponding to the IDc and key derivation parameter do not need to be obtained from the HLR, namely the steps 203∼205/303∼305 can be omitted. Similarly, the TRE of the network equipment can also store the previously generated digital signature key, but does not need to derive again every time; and in this situation, the OMC does not need to send the value of R to the network equipment.

Besides, in the above examples, the HLR/HSS implements the negotiation of the digital signature key by sending the key derivation parameter R which generates the digital signature key to the network equipment; and in other examples of the present invention, the negotiation of the digital signature key can also be a separate flow, and is carried out by adopting a more secure mechanism. For instance, before the step 201/301, the network equipment can adopt the Diffie-Hellman key exchange algorithm to carry out the confidential negotiation of the key with the HLR/HSS and negotiates the current digital signature key. If the Diffie-Hellman key exchange algorithm is adopted, both the network equipment and the HLR/HSS do not need to store the root key K.
(3) in the step 209/309, since the HASH algorithm H1 does not need to use the key, the operation of the HASH calculation on the "file"/Hinfo' using the H1 may not be carried out in the TRE, but in other modules of the network equipment. Certainly, carrying out the HASH calculation in the TRE can improve the security greatly.
(4) the encryption algorithm, such as the Advanced Encryption Standard (AES) algorithm and so on, can be used to substitute the digital signature algorithm S1/integrity protection algorithm I1 in the above examples; and in such a case, it is not necessary to send the H to the network equipment in step 208/308.

The digital signature algorithm and encryption algorithm can be called the cryptographic algorithm in uniform, and the digital signature and the encryption operation can be called cryptographic calculation in uniform.
(5) the OMC can carry out the security characteristic information extracting operation (such as HASH calculation) on the software information to be checked (for example the configuration information of the network equipment, and/or the software "fire" in the first example) and the hardware configuration information (for example the Hinfo in the second example) together, and send the security characteristic information to the EIMC to carry out the digital signature to generate the digital signature result, and then send the digital signature result including the software information and hardware configuration information to the network equipment to carry out the integrity checking.
(6) besides directly sending the software and hardware information to be checked to the network equipment (such as the software "fire" in the first example) or sending the auxiliary information of the software and hardware information to be checked (or called abstract information, for example the hardware information sequence list in the second example) to the network equipment such that the network equipment can locally extract the security characteristic information H' of the software and hardware information to be checked, the OMC can also send the identifier information of the software and hardware information to be checked to the network equipment such that the network equipment can locally obtain the software and hardware information to be checked according to this identifier information.

For instance, the identifier information of the above software and hardware information to be checked can be the software name.
(7) in steps 209/309, the TRE of the network equipment can also adopt the key K1 and the inverse calculation S1⁻¹/I1⁻¹ of the digital signature algorithm S1/integrity protection algorithm I1 to carry out the cryptographic calculation on Sr/Ir to obtain the cryptographic calculation result H"= S1⁻¹(K1,Sr) or H"= I1⁻¹(K1,Ir), and in steps 210/310, check whether the software and hardware of network equipment is integral according to whether the H' and H" are equal.

It should be noted that the integrity checking methods provided in FIG. 2 and FIG. 3 are only examples, and other integrity checking methods can also be used. The present invention does not limit the implementation of the integrity checking method, but instead it emphasizes the application of the stored integrity checking result.

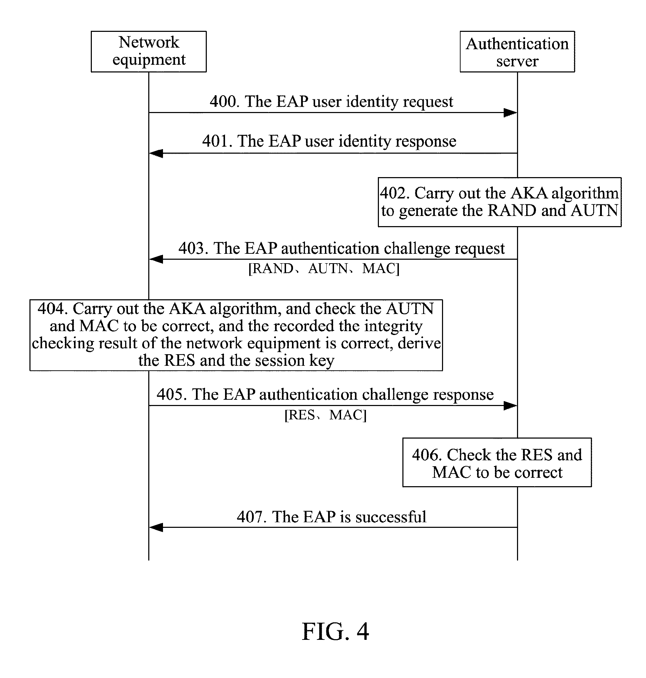

FIG. 4 is a schematic diagram of the normal flow for the EAP-AKA according to an example of the present invention. In this example, it is assumed that the integrity checking result recorded by the TRE of the network equipment is correct. As shown in FIG. 4, this flow comprises the following steps:
Steps 400∼401: the TRE of the network equipment sends the EAP user identity request to the authentication server, and receives the EAP user identity response from the authentication server. The particular implementation can see related protocols and herein it will not be described any more.
Steps 402∼403: the authentication server operates the AKA algorithm, generates the RAND and AUTN, and sends an EAP-AKA access authentication request/EAP authentication challenge request (EAP-Request/AKA-Challenge) including the obtained RAND, AUTN, and MAC to the network equipment. The particular implementation can see related protocols and herein it will not be described any more.
Steps 404∼405, the TRE of the network equipment carries out the AKA algorithm, and checks the AUTN and MAC to be correct, the recorded integrity checking result of the network equipment being correct; and then the TRE of the network equipment derives the RES and the session key, and returns the RES and session key by the EAP authentication challenge response (EAP-Response/AKA-Challenge) to the authentication server. Wherein particular implementation of the AKA algorithm, checking the correctness of the AUTN and MAC, deriving the RES and the session key, and returning to the authentication sever by the EAP authentication challenge response (EAP-Response/ AKA-Challenge) can see related protocols and herein it will not be described any more.
Steps 406∼407: the authentication server checks the RES and MAC to be correct, and returns an EAP success message to the network equipment.

The particular implementation can see related protocols and herein it will not be described any more.

In the flow shown in FIG. 4, in the steps 404∼405, the joint judgment of the recorded integrity checking result of the network equipment is added to finally determine whether the authentication is successful. In said EAP-AKA normal flow in FIG. 4, only when the TRE of the network equipment checks the AUTN and MAC from the authentication server to be correct, and at the same time the recorded integrity checking result of the network equipment is correct, the authentication is considered successful, and the network equipment is secure, and thus the security authentication of the network equipment is ensured, and possibility of endangering the security of the whole system is eliminated.

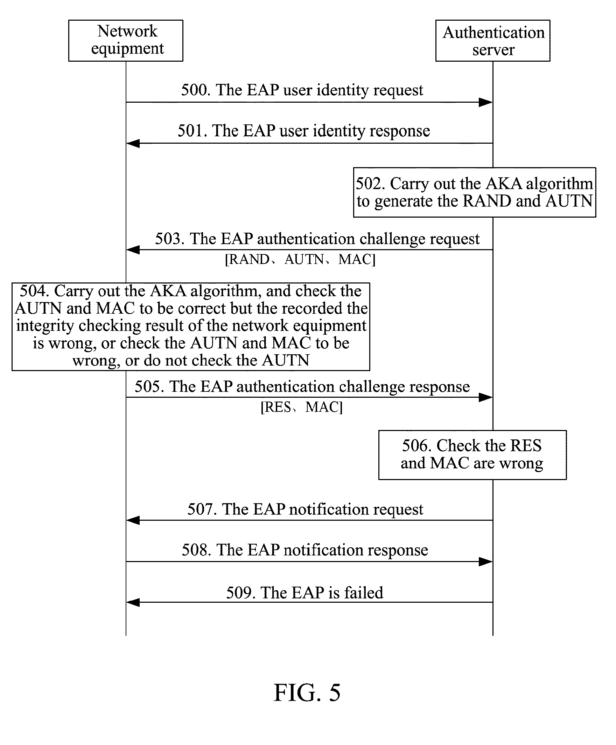

FIG. 5 is a schematic diagram of the abnormal flow for the EAP-AKA according to an example of the present invention. As shown in FIG. 5, this flow comprises the following steps:
Steps 500∼501: the TRE of the network device sends the EAP user identity request to the authentication server, and receives the EAP user identity response from the authentication server. The particular implementation can see related protocols and herein it will not be described any more.
Steps 502∼503: the authentication server operates the AKA algorithm, generates the RAND and AUTN, and sends an EAP-AKA access authentication request/EAP authentication challenge request (EAP-Request/AKA-Challenge) including the obtained RAND, AUTN, and MAC to the network equipment. The particular implementation can see related protocols and herein it will not be described any more.
Steps 504∼505, the TRE of the network equipment carries out the AKA algorithm, checks the AUTN and MAC to be correct, but the recorded integrity checking result of the network equipment is wrong, or checks the AUTN or MAC to be wrong, or does not need to check the RUTN, and then returns the EAP authentication challenge reject response (EAP-Response/ AKA-AKA-Authentication-Reject) to the authentication server. Wherein particular implementation of the AKA algorithm, checking the correctness of the AUTN and MAC, returning the EAP authentication challenge reject response and no necessity of checking the RUTN can see related protocols and herein it will not be described any more.
Step 506: the authentication server checks the RES and MAC to be wrong. The particular implementation can see related protocols and herein it will not be described any more.
Steps 507∼509: the authentication server sends an EAP notification request to the network equipment, and the network equipment responds with an EAP notification response, and then the authentication server responds with an EAP failure message to the network equipment. The particular implementation can see related protocols and herein it will not be described any more.

In the flow shown in FIG. 5, in the steps 504∼505, the joint judgment of the recorded integrity checking result of the network equipment is added to finally determine whether the authentication is successful. In said EAP-AKA abnormal flow in FIG. 5, three cases are comprised, wherein when the AUTN or MAC is checked to be wrong, or when it does not check the RUTN, the authentication is considered failed, and the EAP authentication challenge reject response is returned to the authentication server, which is regulated in the EAP-AKA abnormal flow in protocols; the third case is when the TRE of the network equipment checks the AUTN and MAC from the authentication server to be correct, but the recorded integrity checking result of the network equipment is wrong, the authentication is considered failed, and the EAP authentication challenge reject response is returned to the authentication server.

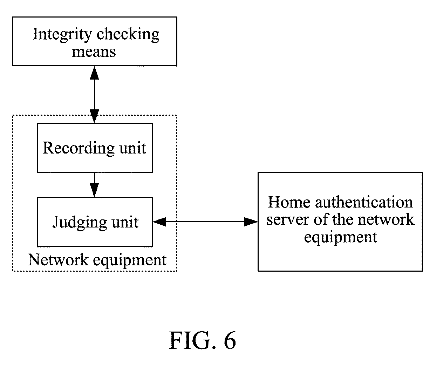

Corresponding to the method of the present invention, the present invention also provides a system for authenticating a network equipment. FIG. 6 is a schematic diagram of the composition structure of the system for authenticating a network equipment according to the present invention. As shown in FIG. 6, this system comprises an integrity checking means, a network equipment configured with a trust environment, and a home authentication server of the network equipment, wherein The integrity checking means is used for carrying out the integrity checking on the network equipment.

The network equipment records the integrity checking result into the trust environment, and receives the access authentication request from the home authentication server of the network equipment. And the trust environment of the network equipment judges whether both of the received access authentication request information and recorded integrity checking result are correct, and, if both are correct, returns an authentication success response to the home authentication server of the network equipment, or else returns an authentication failure response to the home authentication server of the network equipment; The home authentication server of the network equipment is used for initiating an access authentication request to the network equipment, receiving the authentication success/failure response returned by the network equipment, and determining the network to be secure/insecure.

Said network equipment comprises a recording unit and a judging unit configured in the trust environment, wherein The recording unit is used for carrying out the integrity checking with the integrity checking means, and recording the integrity checking result;

The judging unit is used for receiving the access authentication request from the home authentication server of the network equipment, and, when it is judged that both of the received access authentication request information and recorded integrity checking result are correct, returning the authentication success response to the home authentication server of the network equipment; and, when it is judged that received access authentication request information is correct but the recorded integrity checking result is wrong, or it is judged that the received access authentication request information is wrong, or it does not need to check the received access authentication request information, returning an authentication failure response to the home authentication server of the network equipment.

The present invention also provides a system for authenticating a network equipment, and this system comprises an integrity checking means, a network equipment configured with a trust environment, and a home authentication server of the network equipment, wherein:

The integrity checking means is used for carrying out the integrity checking on the network equipment. In the case that an access authentication request is initiated by the network equipment, the network equipment records the integrity checking result by the trust environment, judges whether the recorded integrity checking result is wrong, and if it is wrong, the access authentication request is not sent.

The integrity checking means may also be located in the trust environment of the network equipment.

The home authentication server of the network equipment is used for receiving the access authentication request of the network equipment, analyzing the access authentication request, confirming the validity of the access authentication request, and determining whether the authentication of the network equipment is passed.

Said integrity checking means comprises the network equipment, and the operation and maintenance center. This system further comprises the equipment integrity management center, wherein: Said operation and maintenance center is used for locally extracting the security characteristic information H of the software/hardware information to be checked, and sending H to the equipment integrity management center; Said equipment integrity management center is used for using the key Ks/Ki and the cryptographic algorithm S1/I1 to carry out the cryptographic calculation on the H to obtain the cryptographic calculation result Sr/Ir, and sending the Sr/Ir to the network equipment through the operation and maintenance center.

The trust environment in said network equipment is used for extracting the security characteristic information H' of the software/hardware information to be checked from the network equipment, using the key Ks/Ki and the cryptographic algorithm S1/I1 to carry out the cryptographic calculation on the H' to obtain the cryptographic calculation result Sr'/Ir', and checking whether the software/hardware is integral according to whether the Sr'/Ir' and Sr/Ir are equal; or using the key Ks/Ki and the inverse calculation S1⁻¹/I1⁻¹ of the cryptographic algorithm S1/I1 to carry out the cryptographic calculation on Sr/I1 to obtain the cryptographic calculation result H", and checking whether the software/hardware is integral according to whether the H' and H" are equal; Said system further comprises the equipment home server, and said trust environment and equipment home server stores the root key K corresponding to the trust environment respectively; Said equipment home server is used for adopting said root key K, key derivation parameter R and key derivation algorithm F1 to derive said key Ks/Ki, and sending said key derivation parameter R to the trust environment of the network equipment through said equipment integrity management center and the operation and maintenance center.

Said trust environment of the network equipment is also used for adopting said root key K, key derivation algorithm F1 and received key derivation parameter R to derive said key Ks/Ki.

The above description is only the preferred examples of the present invention, and does not intent to limit the protection scope of the present invention. Any modifications, equivalent substitution and improvements made within the spirit and principle of the present invention shall all be covered by the protection scope the present invention.

### Industrial Applicability

Compared with the prior art, the present invention ensures the secure authentication for the network equipment, and eliminates the possibility that illegal equipment or tampered equipment passes the authentication.

## Claims

1. A method for authenticating a network equipment, and the method comprising:
carrying out integrity checking on the network equipment; and
when the network equipment receives an access authentication request, judging whether both of said access authentication request and a result of said integrity checking are correct, and if both are correct, sending an authentication success response, or else sending an authentication failure response.

2. The method as claimed in claim 1, after the step of carrying out integrity checking on the network equipment, the method further comprising:
the network equipment or a trust environment of the network equipment recording the result of said integrity checking.

3. The method as claimed in claim 1 or 2, wherein the step of judging whether both of said access authentication request and a result of said integrity checking are correct, and if both are correct, sending an authentication success response, or sending an authentication failure response comprises:
if said network equipment or a trust environment of the network equipment checks that said access authentication request is correct and judges that the result of said integrity checking is correct, said network equipment or the trust environment of the network equipment sending the authentication success response;
if said network equipment or the trust environment of the network equipment checks that said access authentication request is correct but judges that the result of said integrity checking is wrong, or checks that said access authentication request is wrong, or is not required to check the access authentication request, said network equipment or the trust environment of the network equipment sending the authentication failure response.

4. The method as claimed in claim 1, wherein said integrity checking includes integrity checking on software of the network equipment and/or integrity checking on hardware of the network equipment.

5. A method for authenticating a network equipment, and the method comprising:
carrying out integrity checking on the network equipment; and
in a case that an access authentication request is initiated by the network equipment, said network equipment or a trust environment of the network equipment judging whether a result of said integrity checking is wrong, and if yes, not sending an access authentication request.

6. The method as claimed in claim 5, after the step of carrying out integrity checking on the network equipment, the method further comprising:
the network equipment or the trust environment of the network equipment recording the result of said integrity checking.

7. The method as claimed in claim 5, wherein said integrity checking includes integrity checking on software of the network equipment and/or integrity checking on hardware of the network equipment.

8. A home authentication server of a network equipment supporting authentication for the network equipment, said home authentication server of the network equipment being configured to initiate an access authentication request to the network equipment, receive an authentication success/failure response returned from the network equipment, analyze the received authentication success/failure response, and determine whether the authentication for the network equipment is passed.

9. A home authentication server of a network equipment supporting authentication for the network equipment, said home authentication server of the network equipment being configured to receive an access authentication request of the network equipment, analyze the access authentication request of the network equipment, determine validity of the access authentication request, and determine whether the authentication for the network equipment is passed.

10. A network equipment supporting authentication, said network equipment being configured with a trust environment, and said network equipment being configured to record a result of integrity checking by said trust environment, receive an access authentication request from a home authentication server of the network equipment, judge whether both of the received access authentication request and recorded result of integrity checking are correct, and when both are correct, return an authentication success response to the home authentication server of the network equipment, or else return an authentication failure response to the home authentication server of the network equipment.

11. The network equipment as claimed in claim 10, wherein said trust environment of the network equipment comprises a recording unit and a judging unit,
said recording unit is configured to carry out the integrity checking cooperating with an integrity checking means, and record the result of the integrity checking;
said judging unit is configured to receive the access authentication request from the home authentication server of the network equipment, and when both of the received access authentication request and the result of integrity checking recorded by the recording unit are judged to be correct, to return the authentication success response to the home authentication server of the network equipment, and when the received access authentication request is judged to be correct but said result of the integrity checking is wrong, or the received access authentication request is judged to be wrong, or checking the received access authentication request is not required, return the authentication failure response to the home authentication server of the network equipment.

12. A network equipment supporting authentication, said network equipment being configured with a trust environment, and said network equipment being configured to, in a case that an access authentication request is initiated by the network equipment, record a result of integrity checking by said trust environment, and to judge whether the recorded result of said integrity checking is wrong, and if yes, not to send the access authentication request.

13. A system for authenticating a network equipment, comprising:
an integrity checking means, the home authentication server of the network equipment as claimed in claim 8, and the network equipment as claimed in claim 10 or 11, wherein said integrity checking means is configured to carry out integrity checking on the network equipment;
or comprising:
an integrity checking means, the home authentication server of the network equipment as claimed in claim 9, and the network equipment as claimed in claim 12, wherein said integrity checking means is configured to carry out integrity checking on the network equipment.

14. The system as claimed in claim 13, wherein said integrity checking means locates in the trust environment of the network equipment.
